# EUROPEAN PATENT APPLICATION

(11) **EP 4 068 900 A1**
(43) Date of publication of application: **05.10.2022**
(21) Application number: 20894788.7
(22) Date of filing: 19.11.2020
(51) Int. Cl.: H04W 76/15, H04W 48/18, H04W 68/12

(54) **COMMUNICATION DEVICE, CONTROL METHOD, AND PROGRAM**

(30) Priority: 27.11.2019 JP 2019214774
(71) Applicant: Canon Kabushiki Kaisha, Ohta-ku Tokyo 146-8501 (JP)
(72) Inventor: SAKAI Tatsuhiko, Tokyo 146-8501 (JP)
(74) Representative: Canon Europe Limited
(86) International application number: PCT/JP2020/043255
(87) International publication number: WO 2021/106750

(57) **Abstract**

When a connection to a cellular communication network 302 is established, in a case of a connection to a cellular communication network 303 is performed, a disconnection from the cellular communication network 302 is performed and communication in the cellular communication network 303 is performed in a case where communication in the cellular communication network 303 can be performed using subscriber information of the cellular communication network 302, and the communication is performed also in the cellular communication network 303 while maintaining connection to the cellular communication network 302 in a case where communication in the cellular communication network 303 cannot be performed using the subscriber information of the cellular communication network 302.

## Description

### Technical Field

The present invention relates to communication in a cellular communication network.

### Background Art

In recent years, institutionalization for allowing companies other than public telecommunication carriers (carriers) to build cellular communication networks has been promoted. It is conceivable that cellular communication networks (carrier networks) built by the carriers and cellular communication networks (private networks) built by the companies other than the carriers will be mixed in the future.

In such an environment, in a case where a calling service of a carrier network can be provided even through a private network by using roaming technique, a terminal connected to the private network can accept a call addressed to a phone number used in the carrier network.

In a case of a closed network in which a private network is not connected to a carrier network, roaming technique cannot be used, and a terminal connected to the private network cannot accept a call addressed to a phone number used in the carrier network.

To address such an issue, PLT 1 discusses a dual standby technique in which a terminal switches between communication via a private network and communication via a carrier network in a time-sharing manner to intermittently check a call from the carrier network.

### Citation List

### Patent Literature

PTL1: Japanese Unexamined Patent Application Publication (Translation of PCT Application) No. 2016-541212

### Summary of Invention

### Technical Problem

In a case where a dual standby technique discussed in PLT 1 is used, a terminal performs audio communication by connecting to the carrier network after a call is received, and therefore, communication in the private network is stopped during the communication. In this case, the communication on the private network is stopped during the audio communication even in a case where the terminal can communicate with the private network during the audio communication if roaming is used, and therefore, the convenience of a user can be reduced.

In view of the foregoing issue, the present invention is directed to improving the convenience of a user by performing control suitable for the characteristics of a communication network.

### Solution to Problem

A communication apparatus of the present invention includes a determination means for determining whether communication can be performed in a second cellular communication network using subscriber information of a first cellular communication network; and a control means for, in a case where the communication apparatus connects to the second cellular communication network, when he communication apparatus is connected to the first cellular communication network, (1) controlling the communication apparatus to communicate also in the second cellular communication network, while maintaining connection to the first cellular communication network, in a case where the determination means determines that communication cannot be performed in the second cellular communication network using the subscriber information, and (2) controlling the communication apparatus to disconnect from the first cellular communication network, and communicate in the second cellular communication network, in a case where the determination means determines that communication can be performed in the second cellular communication network using the subscriber information.

### Advantageous Effects of Invention

According to the present invention, the convenience of a user can be improved by performing control suitable for the characteristics of a communication network.

### Brief Description of Drawings

[Fig. 1] Fig. 1 is a hardware block diagram of a communication apparatus.
[Fig. 2] Fig. 2 is a software functional block diagram of the communication apparatus.
[Fig. 3] Fig. 3 is a diagram of a network configuration.
[Fig. 4] Fig. 4 is a flowchart to be implemented by the communication apparatus.
[Fig. 5] Fig. 5 is a sequence diagram.
[Fig. 6] Fig. 6 is a sequence diagram.

### Description of Embodiments

An exemplary embodiment will be described in detail below with reference to the drawings.

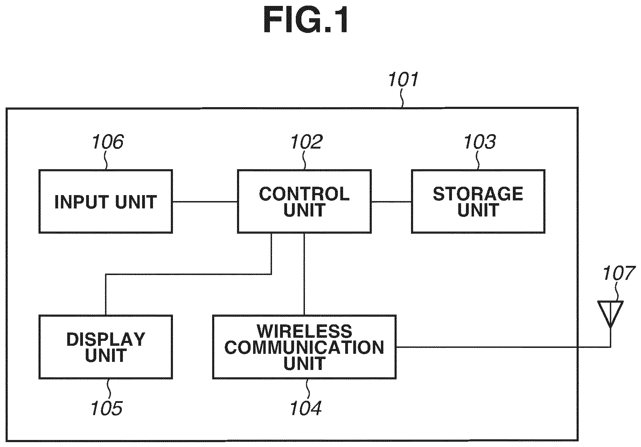

Fig. 1 is a block diagram illustrating a hardware configuration of a communication apparatus 101. A control unit 102 controls the entire apparatus by executing a control program stored in a storage unit 103. The control unit 102 is configured of one or more processors (e.g., a central processing unit (CPU)).

The storage unit 103 stores the control program to be executed by the control unit 102, and various kinds of information, such as communication parameters and captured image data. The storage unit 103 is configured of one or more memories (e.g., a random access memory (RAM), and a read only memory (ROM)). Various operations described below are performed by the the control unit 102 executing the control program stored in the storage unit 103. A wireless communication unit 104 performs cellular network communication, such as Long Term Evolution (LTE) and 5G that are compliant with a 3rd Generation Partnership Project (3GPP) standard.

A display unit 105 performs various types of display, and has a function of enabling output of visually recognizable information, such as a liquid crystal display (LCD) and a light emitting diode (LED), or sound output, such as a speaker. The display unit 105 has a function of outputting at least one of visual information and sound information. An input unit 106 is provided for a user to enter various inputs, and has an operation function for operating the communication apparatus. In other words, the input unit 106 can be said to be an acceptance unit configured to accept an operation from the user. Further, an antenna 107 is provided.

The communication apparatus 101 may be an image input apparatus, such as an imaging apparatus (e.g., a camera and video camera) and a scanner, or may be an image output apparatus, such as a printer (a single function printer (SFP) or a multi-function printer (MFP)), a copier, and a projector. Further, the communication apparatus 101 may be a storage device, such as a hard disk drive and a memory device, or may be an information processing apparatus, such as a personal computer and a smartphone. In the following description, a digital camera will be described as an example of the communication apparatus 101.

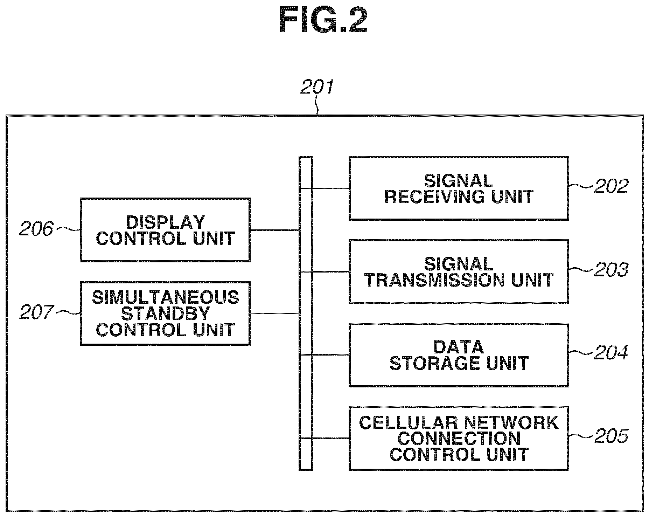

Fig. 2 illustrates software functional blocks (in particular, part related to a communication control function) to be implemented by the control unit 102 of the digital camera reading out a computer program stored in the storage unit 103. Some or all of the software functional blocks illustrated in Fig. 2 may be implemented by hardware. In the case of the implementation by hardware, for example, a dedicated circuit may be generated on a field programmable gate array (FPGA) from a program for implementing each functional block by using a predetermined compiler, and the circuit may be used as a hardware module having the function of the software module. Further, as with the FPGA, a gate array circuit may be realized as hardware.

A block 201 represents the software functional blocks as a whole. A signal receiving unit 202 and a signal transmission unit 203 perform cellular network communication, such as LTE, the fourth generation communication (4G), and the fifth generation communication (5G) that are compliant with the 3GPP standards, with a partner apparatus. A data storage unit 204 stores software itself, subscriber information of a cellular communication network (hereinafter simply referred to as the cellular network), and the like, into the storage unit 103. The subscriber information includes at least International Mobile Subscriber Identity (IMSI) that is a subscriber identification (ID) number.

A cellular network connection control unit 205 performs processing for connecting to and disconnecting from a cellular network, with a base station or a core network function of the cellular network. A display control unit 206 performs processing for controlling a screen to be displayed on the display unit 105. These units implement a notification function of, for example, an error notification described below. A simultaneous standby control unit 207 performs control for standby to receive a call from one cellular network while maintaining connection to another cellular network, by using a dual standby function. Using the dual standby function makes it possible to, for example, intermittently check a call from a carrier network, while switching between communication with a private network and communication with the carrier network in a time-sharing manner. The carrier network and the private network will be described below. The call from the carrier network may be checked while connection to the private network is maintained, by providing a plurality of cellular communication circuits, and operating the plurality of cellular communication circuits in parallel, as the dual standby function.

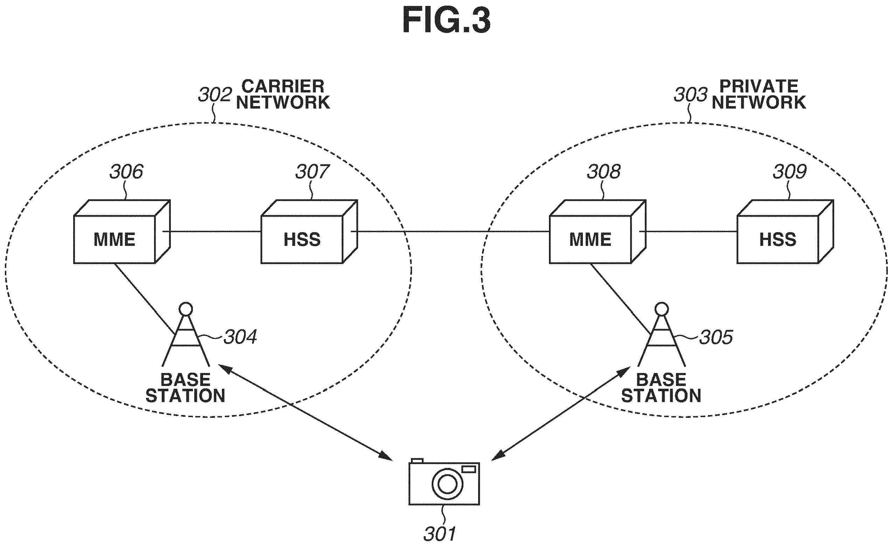

Fig. 3 is a diagram illustrating a network configuration of the present exemplary embodiment.

A digital camera 301 (the communication apparatus 101 described above) is a terminal capable of connecting to and communicating with a carrier network 302 and a private network 303, and stores subscriber information (IMSI) necessary for the connection to each of the networks in the storage unit 103.

The carrier network 302 is a cellular network built by a public telecommunication carrier (a carrier), and includes a base station 304 as a facility of the network.

The carrier network 302 further includes a mobile communication management apparatus (Mobility Management Entity, hereinafter, MME) 306, and a subscriber management apparatus (home subscriber server, hereinafter, HSS) 307.

The private network 303 is a cellular network built by a company other than the carrier, such as local 5G or a regional broadband wireless access (BWA). The private network 303 includes a base station 305 as a facility of the network, a mobile communication management apparatus (MME) 308, and a subscriber management apparatus (HSS) 309.

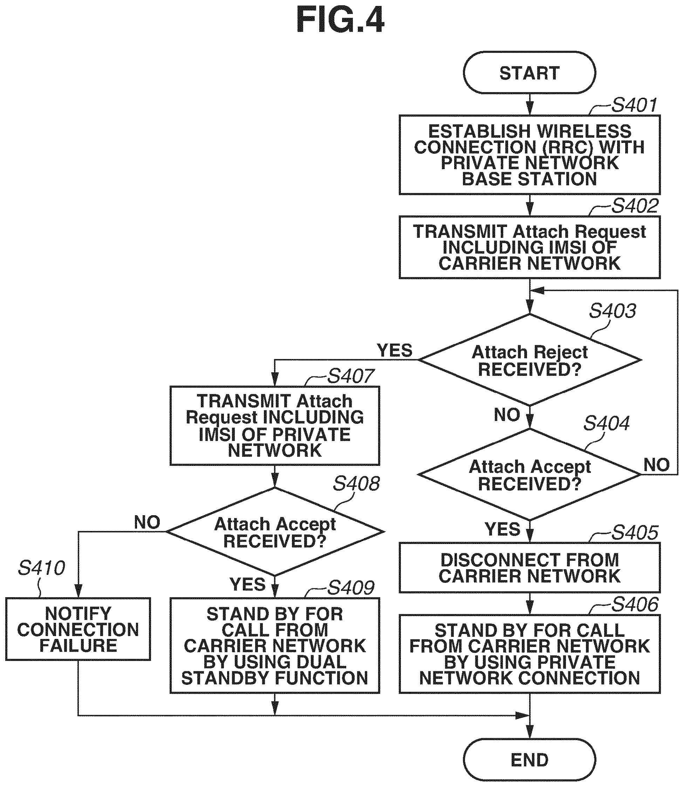

Fig. 4 is a diagram illustrating a flowchart at the time of the private network connection performed in the cellular network connection control unit 205 in the present exemplary embodiment. This flowchart starts when an instruction to connect to the private network 303 is provided from the user via the input unit 108, in a case where the digital camera 301 is connected to the carrier network 302.

First, in step S401, the cellular network connection control unit 205 establishes Radio Resource Control (RRC) for controlling a wireless network, with the private network base station 305. Upon establishing the RRC, in step S402, the cellular network connection control unit 205 transmits an Attach Request message including the subscriber information (IMSI) of the carrier network 302 to the private network MME 308. The digital camera 301 then stands by for a response message from the MME 308 for the Attach Request message.

In a case where a calling service of the carrier network 302 cannot be provided in the private network 303 (hereinafter referred to as "roaming is impossible"), the MME 308 transmits an Attach Reject message as the response message. Thus, in a case where the roaming is impossible, the digital camera 301 receives the Attach Reject message from the MME 308 (YES in step S403). Subsequently, the processing proceeds to step S407.

In contrast, in a case where the calling service of the carrier network 302 can be provided in the private network 303 (hereinafter referred to as "roaming is possible"), the MME 308 transmits an Attach Accept message as the response message. Thus, in a case where the roaming is possible, the digital camera 301 receives the Attach Accept message from the MME 308 (YES in step S404). Subsequently, the processing proceeds to step S405.

In the flowchart in Fig. 4, the digital camera 301 is on standby for the response message, after transmitting the Attach Request message. However, alternatively, in a case where the response message is not received although the standby has continued for a predetermined time, the cellular network connection control unit 205 may provide the user with an error notification, and the processing illustrated in Fig. 4 may end. The error notification may also include a reason for, for example, the connection failure. Further, alternatively, in a case where the response message, in particular, the Attach Accept message, is not received although the standby has continued for a predetermined time, the processing may proceed to step S407.

In a case where the Attach Accept message is received from the MME 308 (YES in step S404), the cellular network connection control unit 205 determines that the roaming is possible, and disconnects from the carrier network 302 in step S405. Specifically, the cellular network connection control unit 205 transmits a Detach Request message (a disconnection request message) compliant with the 3GPP to the carrier network base station 304, thereby disconnecting from the carrier network 302. The digital camera 301 transitions from a NR RRC CONNECTED state to a NR RRC IDLE state, accordingly. In the case of the NR RRC IDLE state, the digital camera 301 is in a state where the RRC with a network is not established.

After disconnecting from the carrier network 302, in step S406, the cellular network connection control unit 205 communicates in the private network 303, and stands by for a call from the carrier network 302 via the private network 303.

Next, the case where the Attach Reject message is received from the MME 308 (YES in step S403) will be described. In this case, the cellular network connection control unit 205 determines that the roaming connection is impossible. Subsequently in step S407, the cellular network connection control unit 205 transmits an Attach Request message including the subscriber information (IMSI) of the private network 303 to the private network MME 308.

In a case where an Attach Accept message is received from the MME 308 after the transmission (YES in step S408), in step S409, the cellular network connection control unit 205 performs control using a dual standby technique by the simultaneous standby control unit 207.

This enables the digital camera 301 to stand by for a call from the carrier network while connecting to the private network, even in a case where the private network 303 does not support roaming with the carrier network 302.

In a case where the Attach Accept message is not received from the MME 308 after the message is transmitted in step S407 (NO in step S408), in step S410, the cellular network connection control unit 205 notifies the user of an error indicating a connection failure, and the processing ends. For example, in a case where a message meaning an Attach failure other than the Attach Accept is received from the MME 308, the cellular network connection control unit 205 notifies the user of the connection failure and the processing ends.

Further, in a case where the Attach Accept message is not received for a fixed period of time after transmitting the message in step S407, the cellular network connection control unit 205 may notify the user of a connection failure, and the processing may end.

The cellular network connection control unit 205 may notify the user that connection to the private network is established, when standing by for a call from the carrier network is made possible in step S406 and step S409.

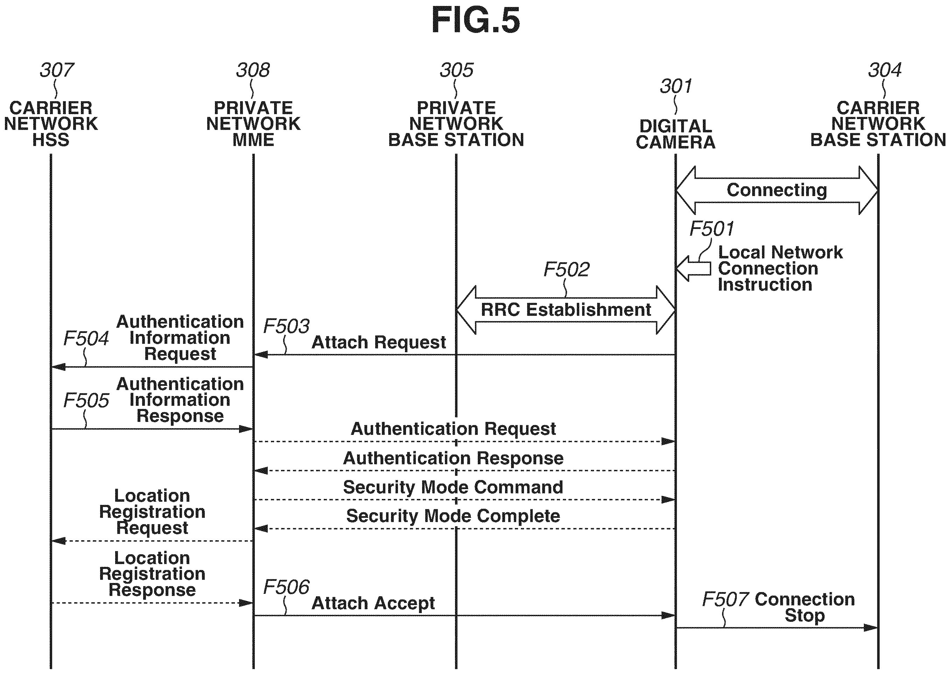

Fig. 5 illustrates a sequence of processing operations performed when the digital camera 301 connected to the carrier network 302 connects to the private network 303 supporting the roaming of the carrier network 302.

Upon accepting an instruction (step F501) to connect to the private network 303 from the user, in steps S401 and F502), the digital camera 301 starts the flowchart illustrated in Fig. 4, and establishes the RRC with the private network base station 305.

After establishing the RRC, in steps S402 and F503), the digital camera 301 transmits an Attach Request message including the subscriber information (IMSI) of the carrier network to the private network MME 308.

In step F504, the private network MME 308 transmits a message requesting authentication information to the carrier network HSS 307 corresponding to the IMSI included in the received Attach Request message. This message is an Authentication Information Request compliant with the 3GPP standard, and includes the subscriber information (IMSI). Subsequently, the private network MME 308 receives a response message for the message transmitted in step F504 from the carrier network HSS 307. This response message is an Authentication Information Answer message compliant with the 3GPP standard. This message includes a set of information called Authentication Vector (AV) to be used for authentication between a terminal and a network.

Upon receiving the response message, the private network MME 308 transmits to the digital camera 301 an Authentication Request message about the authentication and a Security Mode Command message about the security of communication. Here, the Authentication Request message includes information concerning an Authentication Vector, and the authentication is thereby performed.

Further, the private network MME 308 transmits and receives messages (e.g., an UpdateLocation Request message compliant with the 3GPP standard) about the location registration of the digital camera 301 to and from the carrier network HSS 307. In a case where there is a call or the like to the digital camera 301, the call or the like is thereby appropriately transferred to the private network 303, so that the digital camera 301 can accept the call.

Afterward, in step F506, the private network MME 308 transmits an Attach Accept message, which is a message compliant with the 3GPP standard and which permits the digital camera 301 to connect to the private network.

Upon receiving the Attach Accept message (YES in step S404, and step F506), in steps S405 and F507), the digital camera 301 transmits a message for stopping the communication with the carrier network to the carrier network base station 304. In this way, the digital camera 301 enters a state where it is possible to receive a call from the carrier network 302 by a roaming service, while communicating in the private network 303. In other words, in a case where a call to the digital camera 301 arrives at the carrier network 302, this call is transferred from the carrier network 302 to the private network 303, and the digital camera 301 accepts the call from the private network 303 (step S406).

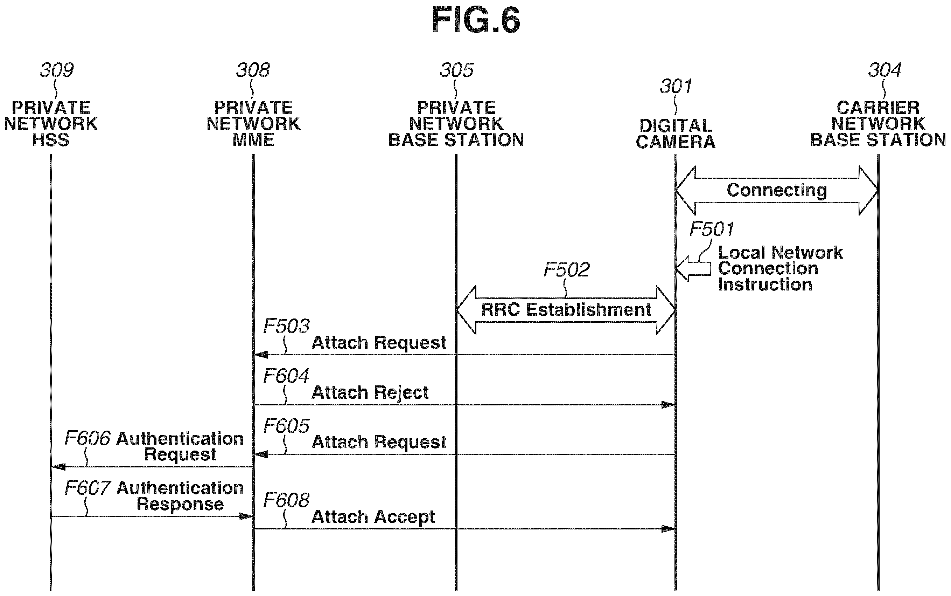

Fig. 6 illustrates a sequence of processing operations performed when the digital camera 301 connected to the carrier network in the present exemplary embodiment connects to the private network 303 not supporting the roaming of the carrier network 302. The same steps as those in Fig. 5 are assigned the same reference numerals as those therein and will be described, but the detailed description thereof will be omitted here.

Upon accepting an instruction (step F501) to connect to the private network 303 from the user, in steps S401 and F502, the flowchart illustrated in Fig. 4 begins, and the digital camera 301 establishes the RRC with the private network base station 305.

After establishing the RRC, in steps S402 and F503, the digital camera 301 transmits an Attach Request message including the subscriber information (IMSI) of the carrier network to the private network MME 308.

Since the private network MME 308 does not support the roaming, in step F604, the private network MME 308 transmits a message rejecting the connection to the private network 303 to the digital camera 301. This message is an Attach Reject message compliant with the 3GPP standard.

Upon receiving the Reject message (YES in step S403, and step F604), in steps S407 and step F605, the digital camera 301 transmits an Attach Request message including the IMSI of the private network to the private network MME 308.

In step F606, the private network MME 308 transmits a message requesting authentication information to the private network HSS 309 corresponding to the IMSI included in the received Attach Request message.

In step F607, upon receiving a response message for the message transmitted in step F606, in step F608, the private network MME 308 transmits an Attach Accept message to permit the connection to the private network 303 to the digital camera 301.

Upon receiving the Accept message, in step S409, the digital camera 301 receives a call of the carrier network 302, while communicating in the private network 303 using the dual standby function.

As described above, the terminal uses the roaming connection and the dual standby function appropriately depending on the environment, so that the convenience of the user can be improved. In addition, in a case where the roaming is possible, switching between the communication networks for connection is performed without using the dual standby function, so that a power saving effect can also be obtained.

The private network connection processing in Fig. 4 is described to be performed when the instruction to connect to the private network 303 is provided from the user via the input unit 108 of the digital camera 301. However, the timing for performing this processing is not limited thereto.

For example, the processing may be performed at the timing when a notification signal transmitted from the base station 305 of the private network is received by the digital camera 301, or may be performed when the digital camera 301 is powered on and the wireless communication can thereby be used.

In such a case, in a case where the digital camera 301 is not connected to the carrier network 302 when the instruction to connect to the private network 303 is provided, a flowchart obtained by omitting step S405 and step S409 in the flowchart illustrated in Fig. 4 is performed. The digital camera 301 can thereby connect to the private network 303 appropriately. Further, in a case where the digital camera 301 has connected to the private network 303 by transmitting an Attach Request including the IMSI of the private network 303 in a state where the digital camera 301 is not connected to the carrier network 302, the digital camera 301 may search for the carrier network 302. This search is continuously or intermittently performed, and in a case where the carrier network 302 is detected, the digital camera 301 also connects to the carrier network 302 while maintaining the connection to the private network 303. The digital camera 301 then receives a call of the carrier network 302, while communicating in the private network 303, using the dual standby function.

Furthermore, in a case where the digital camera 301 disconnects from the private network 303 by disconnecting the carrier network 302 in a state where the digital camera 301 is connected to the private network 303, the digital camera 301 connects to the carrier network 302 again. In this case, the digital camera 301 establishes the RRC with the carrier network 302, and transmits an Attach Request to the carrier network MME 306. When the establishment of the RRC with the carrier network 302 is performed, the permission of the user may be requested, or the RRC may be established without a user operation. Further, these may be switched by user setting.

In contrast, in a case where the digital camera 301 disconnects from the private network 303 in a state where the digital camera 301 is connected to both the carrier network 302 and the private network 303, the dual standby function is canceled, and the connection to the carrier network 302 is maintained. In this way, the communication via the carrier network 302 can be appropriately maintained even after the digital camera 301 disconnects from the private network 303.

In the present invention, a storage medium storing a program code of software for implementing the above-described functions may be supplied to a system or an apparatus, and a computer (a CPU or a micro processing unit (MPU)) of the system or the apparatus may read out and execute the program code stored in the storage medium. In this case, the program code itself read out from the storage medium may implement the functions of the exemplary embodiment described above, and the storage medium storing the program code constitutes the present invention.

As the storage medium for supplying the program code, for example, a flexible disk, a hard disk, an optical disk, a magneto-optical disk, a compact disc ROM (CD-ROM), a compact disc recordable (CD-R), a magnetic tape, a nonvolatile memory card, a ROM, or a digital versatile disc (DVD) can be used.

The above-described functions are implemented by the execution of the read-out program by the computer, but may also be implemented by the execution of part or all of actual processing by an operating system (OS) running on the computer, based on instructions of the program code.

Furthermore, the program code read out from the storage medium may be written in a memory included in a function extension board inserted into the computer or a function extension unit connected to the computer. Subsequently, based on instructions of the program code, a CPU included in the function extension board or the function extension unit may perform part or all of the actual processing, thereby implementing the above-described functions.

The present invention is not limited to the above-described exemplary embodiment, and can be modified and changed in various manners without departing from the spirit and the scope of the present invention. Thereby, the following claims are attached to make the scope of the present invention public.

The present application claims the benefit of priority from Japanese Patent Application No. 2019-214774 filed November 27, 2019, which is hereby incorporated by reference herein in its entirety.

## Claims

1. A communication apparatus comprising:
a determination means for determining whether communication can be performed in a second cellular communication network using subscriber information of a first cellular communication network; and
a control means for, in a case where the communication apparatus connects to the second cellular communication network, when the communication apparatus is connected to the first cellular communication network,
(1) controlling the communication apparatus to communicate also in the second cellular communication network, while maintaining connection to the first cellular communication network, in a case where the determination means determines that communication cannot be performed in the second cellular communication network using the subscriber information, and
(2) controlling the communication apparatus to disconnect from the first cellular communication network, and communicate in the second cellular communication network, in a case where the determination means determines that communication can be performed in the second cellular communication network using the subscriber information.

2. The communication apparatus according to Claim 1, further comprising an acceptance means for accepting a call from the first cellular communication network.

3. The communication apparatus according to Claim 1 or 2, further comprising a first storage means for storing the subscriber information.

4. The communication apparatus according to any one of Claims 1 to 3, further comprising a switching means for switching between communication with the first cellular communication network and communication with the second cellular communication network in a time-sharing manner, in a case where the communication apparatus is connected to the first cellular communication network and the second cellular communication network.

5. The communication apparatus according to any one of Claims 1 to 4, further comprising:
a first cellular communication circuit for communicating with the first cellular communication network; and
a second cellular communication circuit for communicating with the second cellular communication network.

6. The communication apparatus according to any one of Claims 1 to 5, further comprising:
a transmission means for transmitting a request message including the subscriber information to the second cellular communication network; and
a second receiving means for receiving a response message for the request message transmitted by the transmission means,
wherein the determination means performs determination, based on the response message received by the second receiving means.

7. The communication apparatus according to Claim 6, wherein the request message is an Attach Request compliant with a 3rd Generation Partnership Project (3GPP) standard.

8. The communication apparatus according to Claim 6 or 7, wherein the response message is an Attach Accept or Attach Reject compliant with a 3GPP standard.

9. The communication apparatus according to Claim 8, wherein in a case where the second receiving means receives the Attach Accept as the response message, the determination means determines that communication can be performed in the second cellular communication network using the subscriber information.

10. The communication apparatus according to Claim 8 or 9, wherein in a case where the second receiving means receives the Attach Reject as the response message, the determination means determines that communication cannot be performed in the second cellular communication network using the subscriber information.

11. The communication apparatus according to any one of Claims 1 to 10, further comprising a second storage means for storing information concerning whether communication is performed in the second cellular communication network using the subscriber information,
wherein the determination means performs determination, based on the information stored in the second storage means.

12. The communication apparatus according to any one of Claims 1 to 11, wherein the control means disconnects from the first cellular communication network by transmitting a Detach Request message compliant with a 3GPP standard to the first cellular communication network.

13. The communication apparatus according to any one of Claims 1 to 12, wherein the first cellular communication network is a communication network compliant with a 3GPP standard.

14. The communication apparatus according to any one of Claims 1 to 13, wherein the first cellular communication network is a fifth generation (5G) communication network compliant with a 3GPP standard.

15. The communication apparatus according to any one of Claims 1 to 14, wherein the second cellular communication network is a 5G communication network compliant with a 3GPP standard, and is a communication network according to a local 5G.

16. A communication method comprising:
determining whether a communication apparatus can perform communication using subscriber information of a first cellular communication network in a second cellular communication network;
firstly controlling the communication apparatus to communicate also in the second cellular communication network, while maintaining connection to the first cellular communication network, in a case where it is determined that communication cannot be performed in the second cellular communication network using the subscriber information of the first cellular communication network, in a case where the communication apparatus connects to the second cellular communication network, when being connected to the first cellular communication network; and
secondly controlling the communication apparatus to disconnect from the first cellular communication network and communicate in the second cellular communication network, in a case where it is determined that communication can be performed in the second cellular communication network using the subscriber information of the first cellular communication network, in a case where the communication apparatus connects to the second cellular communication network, when being connected to the first cellular communication network.

17. A program for operating a computer as the communication apparatus according to any one of Claims 1 to 15.
